# EUROPÄISCHE PATENTSCHRIFT

(11) **EP 4 196 973 B1**
(45) Veröffentlichungstag und Bekanntmachung des Hinweises auf die Patenterteilung: **30.04.2025**
(21) Anmeldenummer: 21742740.0
(22) Anmeldetag: 28.06.2021
(51) Int. Cl.: G08G 1/0965, G08G 1/0967, B60W 30/18, B60W 60/00

(54) **VERFAHREN ZUM BETRIEB EINES AUTOMATISIERT FAHRENDEN FAHRZEUGES**
METHOD FOR OPERATING A SELF-DRIVING VEHICLE
PROCÉDÉ DE FONCTIONNEMENT D'UN VÉHICULE AUTOMOTEUR

(30) Priorität: 17.08.2020 DE 102020005013
(43) Veröffentlichungstag der Anmeldung: 21.06.2023
(73) Patentinhaber: Mercedes-Benz Group AG, 70372 Stuttgart (DE)
(72) Erfinder: HERMANN, Klaus, Alfred, 71116 Gärtringen (DE)
(74) Vertreter: Novagraaf Group
(86) Internationale Anmeldenummer: PCT/EP2021/067657
(87) Internationale Veröffentlichungsnummer: WO 2022/037829

(56) Entgegenhaltungen:
- DE-A1- 102012 021 282
- DE-A1- 102012 215 093
- DE-A1- 102018 004 113
- DE-A1- 102018 119 832
- US-A1- 2020 211 378

## Beschreibung

Die Erfindung betrifft ein Verfahren zum Betrieb eines automatisiert fahrenden Fahrzeuges im Bereich einer Kreuzung.

Aus der DE 10 2016 203 086 A1 sind ein Verfahren und ein Fahrerassistenzsystem zur Fahrerassistenz bekannt. Das Verfahren sieht vor, dass ein Ego-Fahrzeug ein Fahrmanöver automatisch ausführt, wobei während der Ausführung des Fahrmanövers Objekte in der Umgebung des Ego-Fahrzeuges erkannt werden. Die Objekte werden klassifiziert, wobei Engstellen bildende stationäre Objekte und entgegenkommende Fahrzeuge klassifiziert werden. Anschließend erfolgt ein Vorausberechnen der Bewegung des Ego-Fahrzeuges und der Bewegung von entgegenkommenden Fahrzeugen. Es werden Freiflächen in der Umgebung der Engstellen bildenden stationären Objekte ermittelt und es werden erste Blockadesituationen ermittelt, bei denen eine Weiterfahrt des Ego-Fahrzeuges an einer Engstelle aufgrund eines entgegenkommenden Fahrzeuges nicht mehr möglich ist und/oder es werden zweite Blockadesituationen ermittelt, bei denen durch das Ego-Fahrzeug kein Ende der Engstelle erkennbar ist, wobei bei Ermitteln einer Blockadesituation eine Halt-Position bestimmt wird, an der das Ego-Fahrzeug bis zur Auflösung der Blockadesituation stoppt.

Aus der DE 10 2012 021 282 A1 ist ein Verfahren zur Koordination des Betriebs von vollautomatisiert fahrenden Fahrzeugen bekannt, wobei vorgesehen ist, dass die Fahrzeuge an einer Kreuzung, an der eine Blockadesituation eintreten könnte, Trajektoriendaten untereinander austauschen, um durch eine Trajektorienanpassung eine Blockadesituation zu vermeiden oder aufzulösen.

Aus der DE 10 2018 119 832 A1 ist ein Verfahren zum Betrieb eines autonom fahrenden Fahrzeugs auf einem Fahrbahnabschnitt mit zwei gegenläufigen Fahrspuren bekannt, wobei vorgesehen ist, dass das autonom fahrende Fahrzeug eine Blockierung der gegenläufigen Fahrspur durch ein stehendes Fahrzeug erkennt und in einem solchen Fall beabstandet zu dem stehenden Fahrzeug anhält, um Fahrzeugen auf der gegenläufigen Fahrspur ein Umfahren des stehenden Fahrzeugs zu ermöglichen.

Aus der DE 10 2018 004 113 A1 ist ein autonomes Fahrzeug bekannt, welches für den Betrieb an Kreuzungen vor dem Passieren einer Kreuzung einen erforderlichen Freiraum durch Umgebungserfassung mittels einer Fernsensorik ermittelt und Gesten oder Lichtsignale von anderen Verkehrsteilnehmern erfasst und bewertet.

Aus der US 2020/211 378 A1 ist ein Verfahren zur Verkehrssteuerung an einer ampelgeregelten Kreuzung bekannt, wobei bei der Steuerung eine Priorisierung von Fahrzeugen des öffentlichen Verkehrs vorgenommen wird und wobei die Priorisierung beendet wird, wenn eine vorgegebene Bedingung erfüllt ist, beispielsweise wenn eine Ausfahrt aus der Kreuzung blockiert ist.

Aus der DE 10 2012 215 093 A1 ist ein Verfahren zum Betreiben eines Fahrerassistenzsystems für ein Fahrzeug bekannt, wobei vorgesehen ist, dass eine vorausliegende Engstelle und ein entgegenkommendes Fahrzeug erfasst werden und wobei weiterhin vorgesehen ist, dass eine Sicherheitseinrichtung aktiviert wird, wenn die beiden Fahrzeugs sich voraussichtlich im Bereich der Engstelle treffen werden.

Der Erfindung liegt die Aufgabe zugrunde, ein verbessertes Verfahren zum Betrieb eines automatisiert fahrenden Fahrzeuges an einer Kreuzung anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zum Betrieb eines automatisiert, insbesondere fahrerlos, fahrenden Fahrzeuges im Bereich einer Kreuzung sieht erfindungsgemäß vor, dass das Fahrzeug in einer Situation, in der es an der Kreuzung unter Beachtung einer Vorfahrtsregelung steht, anhand erfasster Signale einer Umgebungssensorik ein an der Kreuzung vorfahrtberechtigtes weiteres Fahrzeug erfasst und dessen beabsichtigten Fahrweg ermittelt. Das Fahrzeug ermittelt anhand des beabsichtigten Fahrweges , ob das weitere Fahrzeug nach Passieren der Kreuzung seitlich an dem Fahrzeug vorbeifahren muss, und ermittelt in einem solchen Fall, ob der Fahrweg des weiteren Fahrzeuges durch ein Hindernis blockiert wird. Das Fahrzeug stellt in einem Fall, in dem es ermittelt hat, dass der Fahrweg des weiteren Fahrzeuges blockiert ist, eine Kommunikationsverbindung zu dem weiteren Fahrzeug her, und informiert das weitere Fahrzeug über diese Kommunikationsverbindung über den blockierten Fahrweg.

Durch Anwendung des Verfahrens kann eine Blockadesituation der beiden Fahrzeuge weitestgehend ausgeschlossen werden, insbesondere im Fall, wenn die zwei automatisiert fahrenden Fahrzeuge an einer Rechts-vor-links-Kreuzung stehen und das vorfahrtberechtigte weitere Fahrzeug beabsichtigt, auf eine Fahrbahn des Fahrzeuges abzubiegen und das weitere Fahrzeug vor dem Fahrzeug stehen bleiben muss, da das weitere Fahrzeug, beispielsweise wegen eines parkenden Fahrzeuges nicht seitlich an dem Fahrzeug vorbeifahren kann, so dass beide Fahrzeuge ohne weitere Maßnahme auf unbestimmte Zeit dort verharren bis die Blockadesituation beispielsweise mit Hilfe eines Teleoperators aufgehoben werden kann.

Dadurch, dass zumindest das Fahrzeug die sich anbahnende Blockadesituation erkennt und das weitere Fahrzeug entsprechend kommuniziert, so dass eine Lösung gefunden werden kann, kann zudem ein Verkehrsfluss optimiert werden, da einem Entstehen einer solchen Blockadesituation entgegen gewirkt werden kann.

Eine Ausführung des Verfahrens sieht vor, dass abgestimmt wird, in welcher Reihenfolge die beiden Fahrzeuge die Kreuzung passieren. Insbesondere wird die Reihenfolge zur Vermeidung der Blockadesituation abgestimmt, so dass das Fahrzeug zuerst seinen Fahrbetrieb aufnimmt, um die Kreuzung zu passieren, obwohl das weitere Fahrzeug vorfahrtberechtigt ist.

In einer Weiterbildung wird mittels des Fahrzeuges zusätzlich ermittelt, ob eine Sicht des weiteren Fahrzeuges auf das seinen Fahrweg blockierende Hindernis verdeckt ist. Insbesondere wenn ermittelt wird, dass die Sicht des weiteren Fahrzeuges auf das Hindernis verdeckt ist, wird unverzüglich die Kommunikationsverbindung zwischen den beiden Fahrzeugen aufgebaut, um zu vermeiden, dass das weitere Fahrzeug seinen Fahrbetrieb aufnimmt und dadurch die Blockadesituation für die beiden Fahrzeuge entsteht.

Eine weitere Ausbildung des Verfahrens sieht vor, dass zur Ermittlung des Entstehens der Blockadesituation eine verbleibende Fahrbahnbreite zwischen dem Fahrzeug und dem den Fahrweg des weiteren Fahrzeuges blockierenden Hindernis und eine Breite des weiteren Fahrzeuges ermittelt werden. Dabei werden die verbleibende Fahrbahnbreite und die Breite des weiteren Fahrzeuges anhand erfasster Signale des Fahrzeuges ermittelt, um einen Vergleich durchzuführen.

Die verbleibende Fahrbahnbreite wird in einer möglichen Ausführung zur Ermittlung des Entstehens einer Blockadesituation mit der Breite des weiteren Fahrzeuges verglichen, so dass ermittelt werden kann, ob die verbleibende Fahrbahnbreite für das weitere Fahrzeug ausreichend ist, um seitlich an dem Fahrzeug und insbesondere zwischen dem Fahrzeug und dem Hindernis vorbeizufahren, wenn das weitere Fahrzeug zuerst die Kreuzung passiert.

Dabei wird der beabsichtigte Fahrweg des weiteren Fahrzeuges in einer Ausbildung des Verfahrens anhand eines aktivierten Fahrtrichtungsanzeigers und/oder anhand einer über eine Fahrzeug-zu-Fahrzeugkommunikation übermittelte Information ermittelt. Das Fahrzeug verfügt also über eine Information, welchen Fahrweg das weitere Fahrzeug beabsichtigt zu fahren, so dass ermittelt werden kann, ob das Hindernis auf der Fahrbahn des Fahrzeuges für einen Abbiegevorgang des weiteren Fahrzeuges von Belang ist.

Mittels des weiteren Fahrzeuges werden zur Plausibilisierung der Breite des weiteren Fahrzeuges dessen Breite sowie ein Signal des gesetzten Fahrtrichtungsanzeigers über eine Fahrzeug-zu-Fahrzeugkommunikation an das Fahrzeug gesendet. Somit können der Fahrweg des weiteren Fahrzeuges und die verbleibende Fahrbahnbreite zwischen dem Fahrzeug und dem Hindernis plausibilisiert werden.

Auch das weitere Fahrzeug wird im automatisierten Fahrbetrieb und fahrerlos betrieben, so dass keine Verständigung von Fahrzeugnutzern der beiden Fahrzeuge möglich ist, um die Blockadesituation weitestgehend zu vermeiden oder aufzulösen.

Ausführungsbeispiele der Erfindung werden im Folgenden anhand von Zeichnungen näher erläutert.

Dabei zeigen:
- Fig. 1: schematisch einen Kreuzungsbereich ohne vorfahrtsregelnde Verkehrszeichen, Lichtsignalanlagen oder Polizeibeamte, ein Fahrzeug sowie ein links abbiegendes weiteres Fahrzeug und
- Fig. 2: schematisch den Kreuzungsbereich mit den beiden Fahrzeugen und einem jeweiligen Erfassungsbereich von Erfassungseinheiten einer Umgebungssensorik des Fahrzeuges.

Einander entsprechende Teile sind in allen Figuren mit den gleichen Bezugszeichen versehen.

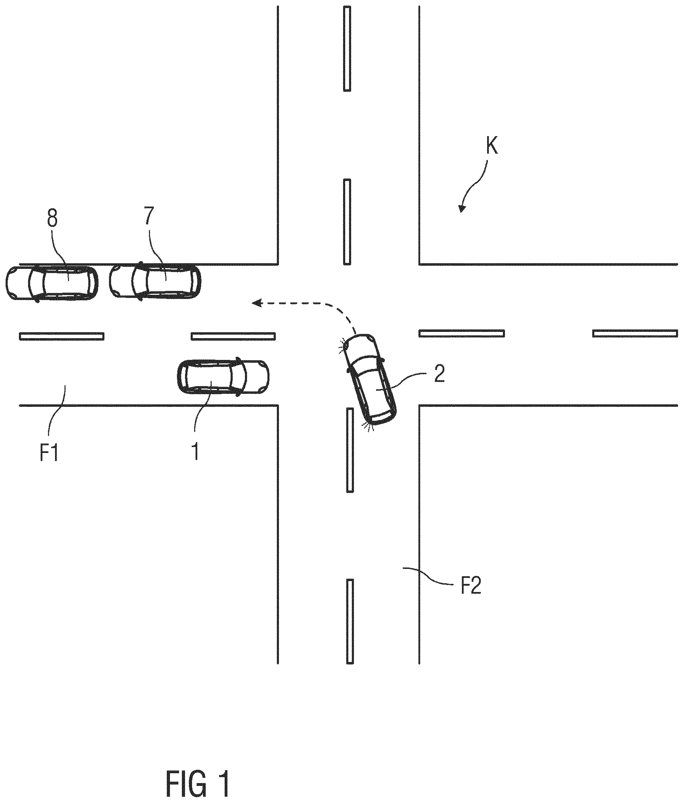

Figur 1 zeigt einen Bereich einer Kreuzung K ohne vorfahrtsregelnde Verkehrszeichen, Lichtsignalanlagen oder Polizeibeamte. Ein Fahrzeug 1 steht unter Beachtung einer Vorfahrtsregelung auf einer Fahrbahn F1 der Kreuzung K, wobei ein links abbiegendes weiteres Fahrzeug 2 auf einer weiteren Fahrbahn F2 der Kreuzung steht. Das weitere Fahrzeug 2 ist gegenüber dem Fahrzeug 1 vorfahrtberechtigt.

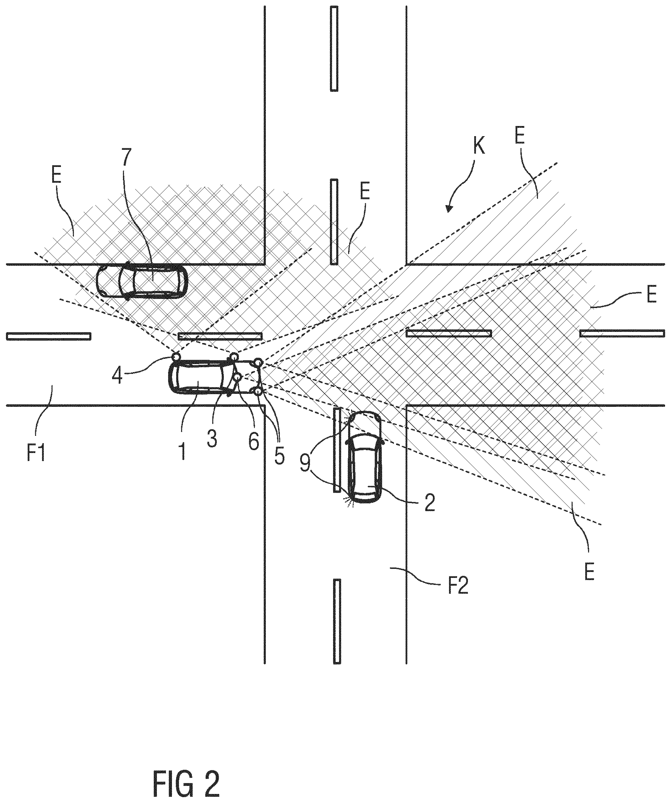

Die Kreuzung K mit den beiden Fahrzeugen 1, 2 und einem jeweiligen Erfassungsbereich E von Erfassungseinheiten 3 bis 6 einer Umgebungssensorik des Fahrzeuges 1 ist in Figur 2 dargestellt.

Die beiden Fahrzeuge 1, 2 fahren im automatisierten Fahrbetrieb, wobei eine Fahraufgabe vollumfänglich von dem jeweiligen Fahrzeug 1, 2 ausgeführt wird und sich kein Fahrzeugnutzer in dem jeweiligen Fahrzeug 1, 2 befindet.

Auf einer Gegenfahrspur der Fahrbahn F1 des Fahrzeuges 1 stehen zwei längs parkende Fahrzeuge 7, 8, wobei ein erstes parkendes Fahrzeug 7 abschnittsweise neben dem Fahrzeug 1 steht.

Biegt das für das Fahrzeug 1 von rechts kommende weitere Fahrzeug 2 vor dem Fahrzeug 1 auf dessen Fahrbahn F1 ab, kann das weitere Fahrzeug 2 das Fahrzeug 1 seitlich nicht passieren und bleibt vor dem Fahrzeug 1 stehen. Somit liegt eine Blockadesituation für beide Fahrzeuge 1, 2 vor, so dass beide Fahrzeuge 1, 2 ohne weitere Maßnahme für eine unbestimmte Zeitdauer in dieser Blockadesituation verharren, bis beispielsweise ein Teleoperator eine Fernsteuerung zumindest eines der beiden Fahrzeuge 1, 2 übernimmt, um die Blockadesituation aufzulösen oder das erste parkende Fahrzeug 7 seine Parkposition verlässt.

Um eine derartige Blockadesituation weitestgehend zu vermeiden, ist ein im Folgenden beschriebenes Verfahren vorgesehen.

Das Fahrzeug 1 umfasst die Umgebungssensorik mit zumindest den Erfassungseinheiten 3 bis 6, die im Fahrbetrieb des Fahrzeuges 1 fortlaufend Signale erfassen. Anhand der erfassten Signale werden eine Umgebung des Fahrzeuges 1 und sich in dieser befindende Objekte und somit auch das weitere Fahrzeug 2 detektiert.

Anhand erfasster Signale einer, insbesondere als Seitenkamera ausgebildeten Erfassungseinheit 3 sowie anhand erfasster Signale einer als radarbasierter Heckseitensensor ausgebildeten Erfassungseinheit 4 wird zumindest das erste parkende Fahrzeug 7 neben dem Fahrzeug 1 detektiert. Insbesondere wird das erste parkende Fahrzeug 7 als Objekt und Hindernis erkannt, welches eine Durchfahrt für ein dem Fahrzeug 1 auf der Gegenfahrspur seiner Fahrbahn F1 potentiell entgegenkommendes weiteres Fahrzeug 2 versperrt. D. h., dass eine Fahrbahnbreite zur Durchfahrt des weiteren Fahrzeuges 2, d. h. ein Abstand zwischen dem Fahrzeug 1 und dem ersten parkenden Fahrzeug 7 zu gering ist.

Dazu wird anhand erfasster Signale, insbesondere der als Seitenkamera ausgebildeten Erfassungseinheit 4 die verbleibende Fahrbahnbreite zwischen dem Fahrzeug 1 und dem ersten parkenden Fahrzeug 7 als Hindernis ermittelt. Ein eine Blockadesituation hervorrufendes Hindernis kann auch ein Baustellenzaun oder ein anderes einen Fahrweg des weiteren Fahrzeuges 2 blockierendes Objekt auf der Gegenspur des Fahrzeuges 1 sein.

Anhand erfasster Signale einer als radarbasierter Frontecksensor ausgeführten Erfassungseinheit 5 sowie anhand erfasster Signale einer als Frontkamera ausgebildeten Erfassungseinheit 6 wird das weitere Fahrzeug 2 und sein aktivierter Fahrtrichtungsanzeiger 9 detektiert. Zudem wird eine Breite des weiteren Fahrzeuges 2 insbesondere anhand von Signalen der Erfassungseinheiten 5, 6 ermittelt.

Dadurch, dass der Fahrtrichtungsanzeiger 9 des weiteren Fahrzeuges 2 aktiviert ist, kann ein Fahrweg des weiteren Fahrzeuges 2 ermittelt werden, wobei das weitere Fahrzeug 2 beabsichtigt, links abzubiegen.

Zur Ermittlung, ob das weitere Fahrzeug 2 das Fahrzeug 1 trotz des ersten parkenden Fahrzeuges 7 seitlich passieren kann, wird die ermittelte verbleibende Fahrbahnbreite zwischen dem Fahrzeug 1 und dem ersten parkenden Fahrzeug 7 mit der ermittelten Breite des weiteren Fahrzeuges 2 verglichen.

Das weitere Fahrzeug 2 sendet zur Plausibilisierung der Breite des weiteren Fahrzeuges 2 seine Breite sowie ein Signal des gesetzten Fahrtrichtungsanzeigers 9 über eine Kommunikationsverbindung an das Fahrzeug 1.

In einer Ausführungsform des Verfahrens ist vorgesehen, dass anhand der erfassten Signale der Umgebungssensorik des Fahrzeuges 1 ermittelt wird, ob eine Sicht des weiteren Fahrzeuges 2 auf das seinen Fahrweg blockierende Hindernis in Form des ersten parkenden Fahrzeuges 1 verdeckt ist.

Dadurch, dass es sich bei der Kreuzung K um eine gleichrangige Kreuzung K handelt, hat das weitere Fahrzeug 2 gegenüber dem Fahrzeug 1 Vorrang, die Kreuzung K zu passieren.

Wird von dem Fahrzeug 1 ermittelt, dass eine Blockadesituation zwischen dem Fahrzeug 1 und dem weiteren Fahrzeug 2 entsteht, wenn das weitere Fahrzeug 1 von seinem Vorfahrtsrecht Gebrauch macht, und zusätzlich die Sicht des weiteren Fahrzeuges 2 auf das erste parkende Fahrzeug 7 verdeckt ist, wird die Kommunikationsverbindung erneut zwischen den beiden Fahrzeugen 1, 2 aufgebaut.

Über die Kommunikationsverbindung, insbesondere eine Fahrzeug-zu-Fahrzeugkommunikation, wird das weitere Fahrzeug 2 über seinen blockierten Fahrweg informiert und das weitere Fahrzeug 2 quittiert einen Erhalt dieser Information. Anschließend wird trotz des bestehenden Vorfahrtsrechtes des weiteren Fahrzeuges 2 zwischen den beiden Fahrzeugen 1, 2 abgestimmt, welches der beiden Fahrzeuge 1, 2 die Kreuzung K zuerst passieren soll.

Aufgrund der entstehenden Blockadesituation, im Fall, dass das weitere Fahrzeug 1 zuerst die Kreuzung K passiert, werden sich die Fahrzeuge 1, 2 dahingehend einigen, dass das weitere Fahrzeug 2 dem Fahrzeug 1 über die bestehende Kommunikationsverbindung mitteilt, dass das Fahrzeug 1 die Kreuzung K vor dem weiteren Fahrzeug 2 passiert.

Insbesondere sendet das weitere Fahrzeug 2 eine Vorfahrt-Gewähr-Information an das Fahrzeug 1, welches wiederum deren Erhalt quittiert und seinen automatisierten Fahrbetrieb aufnimmt.

## Patentansprüche

1. Verfahren zum Betrieb eines automatisiert fahrenden Fahrzeuges (1) im Bereich einer Kreuzung (K),
**dadurch gekennzeichnet, dass**
- das Fahrzeug (1) in einer Situation, in der es an der Kreuzung (K) unter Beachtung einer Vorfahrtsregelung steht, anhand erfasster Signale einer Umgebungssensorik ein an der Kreuzung (K) vorfahrtberechtigtes weiteres Fahrzeug (2) erfasst und dessen beabsichtigten Fahrweg ermittelt,
- das Fahrzeug (1) anhand des beabsichtigten Fahrweges des weiteren Fahrzeugs (2) ermittelt, ob das weitere Fahrzeug (2) nach Passieren der Kreuzung (K) seitlich an ihm vorbeifahren muss, und in einem solchen Fall ermittelt, ob der Fahrweg des weiteren Fahrzeuges (2) durch ein Hindernis blockiert wird,
- das Fahrzeug (1) in einem Fall, in dem es ermittelt hat, dass der Fahrweg des weiteren Fahrzeuges (2) durch ein Hindernis blockiert ist, eine Kommunikationsverbindung zu dem weiteren Fahrzeug (2) herstellt und über diese das weitere Fahrzeug (2) über den blockierten Fahrweg informiert.

2. Verfahren nach Anspruch 1,
**dadurch gekennzeichnet, dass**
abgestimmt wird, in welcher Reihenfolge die beiden Fahrzeuge (1, 2) die Kreuzung (K) passieren.

3. Verfahren nach Anspruch 1 oder 2,
**dadurch gekennzeichnet, dass**
mittels des Fahrzeuges (1) ermittelt wird, ob eine Sicht des weiteren Fahrzeuges (2) auf das seinen Fahrweg blockierende Hindernis verdeckt ist.

4. Verfahren nach einem der vorhergehenden Ansprüche,
**dadurch gekennzeichnet, dass**
zur Ermittlung eines Entstehens einer Blockadesituation eine verbleibende Fahrbahnbreite zwischen dem Fahrzeug (1) und dem den Fahrweg des weiteren Fahrzeuges (2) blockierenden Hindernis und eine Breite des weiteren Fahrzeuges (2) ermittelt werden.

5. Verfahren nach Anspruch 4,
**dadurch gekennzeichnet, dass**
zur Ermittlung des Entstehens der Blockadesituation die verbleibende Fahrbahnbreite mit der Breite des weiteren Fahrzeuges (2) verglichen wird.

6. Verfahren nach einem der vorhergehenden Ansprüche,
**dadurch gekennzeichnet, dass**
der beabsichtigte Fahrweg des weiteren Fahrzeuges (2) anhand eines aktivierten Fahrtrichtungsanzeigers (8) und/oder anhand einer über eine Fahrzeug-zu-Fahrzeugkommunikation übermittelten Information ermittelt wird.

7. Verfahren nach Anspruch 6,
**dadurch gekennzeichnet, dass**
mittels des weiteren Fahrzeuges (2) zur Plausibilisierung der Breite des weiteren Fahrzeuges (2) dessen Breite sowie ein Signal des gesetzten Fahrtrichtungsanzeigers (9) über eine Fahrzeug-zu-Fahrzeugkommunikation an das Fahrzeug (1) gesendet werden.

8. Verfahren nach einem der vorhergehenden Ansprüche,
**dadurch gekennzeichnet, dass**
das weitere Fahrzeug (2) im automatisierten Fahrbetrieb und fahrerlos betrieben wird.

## Claims

1. Method for operating an automated vehicle (1) in the region of an intersection (K),
**characterized in that**
- the vehicle (1), in a situation in which it is stationary at the intersection (K) adhering to a right-of-way rule, detects another vehicle (2) with right-of-way at the intersection (K) on the basis of detected signals from an environmental sensor system and determines the intended route of this other vehicle,
- the vehicle (1) determines, on the basis of the intended route of the other vehicle (2), whether the other vehicle (2) must pass it laterally after passing the intersection (K), and in such a case determines whether the route of the other vehicle (2) is blocked by an obstacle,
- the vehicle (1), in a case in which it has determined that the route of the other vehicle (2) is blocked by an obstacle, establishes a communication link to the other vehicle (2) and uses this to inform the other vehicle (2) about the blocked route.

2. Method according to claim 1,
**characterized in that**
the order in which the two vehicles (1, 2) pass the intersection (K) is agreed upon.

3. Method according to either claim 1 or claim 2,
**characterized in that**
by means of the vehicle (1) it is determined whether the view of the other vehicle (2) of the obstacle blocking its route is obscured.

4. Method according to any of the preceding claims,
**characterized in that**
in order to determine whether a blockage situation has occurred, a remaining road width between the vehicle (1) and the obstacle blocking the route of the other vehicle (2) and a width of the other vehicle (2) are determined.

5. Method according to claim 4,
**characterized in that**
in order to determine whether the blockage situation has occurred, the remaining road width is compared with the width of the other vehicle (2).

6. Method according to any of the preceding claims,
**characterized in that**
the intended route of the other vehicle (2) is determined on the basis of an activated turn signal light (8) and/or on the basis of information transmitted via vehicle-to-vehicle communication.

7. Method according to claim 6,
**characterized in that**
by means of the other vehicle (2), in order to verify the plausibility of the width of the other vehicle (2), the width thereof and a signal of the set turn signal light (9) are sent to the vehicle (1) via vehicle-to-vehicle communication.

8. Method according to any of the preceding claims,
**characterized in that**
the other vehicle (2) is operated in automated driving mode and driverlessly.

## Revendications

1. Procédé permettant de faire fonctionner un véhicule (1) à conduite automatisée dans la zone d'une intersection (K),
**caractérisé en ce que**
- le véhicule (1), dans une situation dans laquelle il se trouve à l'intersection (K) en tenant compte d'une réglementation de priorité, détecte, à l'aide de signaux détectés par une technologie de capteurs d'environnement, un autre véhicule (2) ayant la priorité à l'intersection (K) et détermine la trajectoire envisagée par celui-ci,
- le véhicule (1) détermine, à l'aide de la trajectoire envisagée par l'autre véhicule (2), si l'autre véhicule (2) doit passer latéralement devant lui ou non après avoir traversé l'intersection (K) et, dans un tel cas, détermine si la trajectoire de l'autre véhicule (2) est bloquée ou non par un obstacle,
- le véhicule (1), dans un cas où il a déterminé que la trajectoire de l'autre véhicule (2) est bloquée par un obstacle, établit une connexion de communication avec l'autre véhicule (2) et informe l'autre véhicule (2) par l'intermédiaire de celle-ci que la trajectoire est bloquée.

2. Procédé selon la revendication 1,
**caractérisé en ce que**
l'ordre dans lequel les deux véhicules (1, 2) traversent l'intersection (K) est déterminé.

3. Procédé selon la revendication 1 ou 2,
**caractérisé en ce que**
au moyen du véhicule (1), on détermine si une vue de l'autre véhicule (2) sur l'obstacle bloquant sa trajectoire est masquée ou non.

4. Procédé selon l'une des revendications précédentes,
**caractérisé en ce que**
une largeur de chaussée restante entre le véhicule (1) et l'obstacle bloquant la trajectoire de l'autre véhicule (2) et une largeur de l'autre véhicule (2) sont déterminées pour permettre de déterminer une apparition d'une situation de blocage.

5. Procédé selon la revendication 4,
**caractérisé en ce que**
la largeur de chaussée restante est comparée à la largeur de l'autre véhicule (2) pour permettre de déterminer l'apparition de la situation de blocage.

6. Procédé selon l'une des revendications précédentes,
**caractérisé en ce que**
la trajectoire envisagée par l'autre véhicule (2) est déterminée à l'aide d'un indicateur de direction (8) activé et/ou à l'aide d'informations transmises par l'intermédiaire d'une communication de véhicule à véhicule.

7. Procédé selon la revendication 6,
**caractérisé en ce que**
pour permettre l'analyse de plausibilité de la largeur de l'autre véhicule (2), l'autre véhicule (2) envoie au véhicule (1) sa largeur ainsi qu'un signal de l'indicateur de direction (9) mis en place par l'intermédiaire d'une communication de véhicule à véhicule.

8. Procédé selon l'une des revendications précédentes,
**caractérisé en ce que**
l'autre véhicule (2) fonctionne en fonctionnement de conduite automatisé et sans conducteur.
